# EUROPEAN PATENT SPECIFICATION

(11) **EP 2 959 663 B1**
(45) Date of publication and mention of the grant of the patent: **10.10.2018**
(21) Application number: 14711636.2
(22) Date of filing: 25.02.2014
(51) Int. Cl.: G05B 13/02, G08C 17/02, H04L 29/08

(54) **CONTROLLING MANY DIFFERENT DEVICES FROM A SMART CONTROLLER**
STEUERUNG VIELER VERSCHIEDENE VORRICHTUNGEN MITHILFE EINER INTELLIGENTEN STEUERUNGSVORRICHTUNG
COMMANDE DE MULTIPLES DISPOSITIFS DIFFÉRENTS À PARTIR D'UN DISPOSITIF DE COMMANDE INTELLIGENT

(30) Priority: 25.02.2013 US 201361769148 P; 24.02.2014 US 201414187620
(43) Date of publication of application: 30.12.2015
(73) Proprietor: Qualcomm Incorporated, San Diego, CA 92121-1714 (US)
(72) Inventor: GLICKFIELD, Sarah, San Diego, California 92121-1714 (US); GUEDALIA, Isaac David, San Diego, California 92121-1714 (US); GUEDALIA, Jacob, New York, New York 10011 (US)
(74) Representative: Dunlop, Hugh Christopher
(86) International application number: PCT/US2014/018406
(87) International publication number: WO 2014/131035

(56) References cited:
- WO-A1-00/17737
- WO-A1-2006/072870
- WO-A1-2012/099923
- WO-A2-2007/023414

## Description

### BACKGROUND OF THE INVENTION

### 1. Field of the Invention

Embodiments are directed to controlling of Internet of Everything (IoE) or Internet of Things (IoT) devices based on detecting a device and obtaining control information and associated rules for controlling the device.

### 2. Description of the Related Art

The Internet is a global system of interconnected computers and computer networks that use a standard Internet protocol suite (e.g., the Transmission Control Protocol (TCP) and Internet Protocol (IP)) to communicate with each other. The Internet of Things (IoT) is based on the idea that everyday objects, not just computers and computer networks, can be readable, recognizable, locatable, addressable, and controllable via an IoT communications network (e.g., an ad-hoc system or the Internet).

A number of market trends are driving development of IoT devices. For example, increasing energy costs are driving governments' strategic investments in smart grids and support for future consumption, such as for electric vehicles and public charging stations. Increasing health care costs and aging populations are driving development for remote/connected health care and fitness services. A technological revolution in the home is driving development for new "smart" services, including consolidation by service providers marketing 'N' play (e.g., data, voice, video, security, energy management, etc.) and expanding home networks. Buildings are getting smarter and more convenient as a means to reduce operational costs for enterprise facilities.

There are a number of key applications for the IoT. For example, in the area of smart grids and energy management, utility companies can optimize delivery of energy to homes and businesses while customers can better manage energy usage. In the area of home and building automation, smart homes and buildings can have centralized control over virtually any device or system in the home or office, from appliances to plug-in electric vehicle (PEV) security systems. In the field of asset tracking, enterprises, hospitals, factories, and other large organizations can accurately track the locations of high-value equipment, patients, vehicles, and so on. In the area of health and wellness, doctors can remotely monitor patients' health while people can track the progress of fitness routines.

In particular, it is desired to control the devices from a single controller (e.g., smart phone). These devices include air conditioners, heaters, fans, computers, audio devices, video devices, among others. Current solutions require that users download a dedicated application for each device. This is because the devices and the controller must talk the same language. However, there is no integration of the functionality between devices or relationships between devices.

Patent application WO2012/099923A1 discloses the configuration of the user interface of a remote control device using device identifiers of a controlled device and rules obtained from a server. Patent application WO00/17737 discloses context dependent control information.

### SUMMARY

The invention concerns a method according to claim 1 and corresponding smart controller and computer readable medium according to claims 10 and 11 respectively.

The disclosure is directed to controlling of Internet of Things (IoT) devices based on detecting a device and obtaining control information and associated rules for controlling the device. The control functions available to a smart controller can vary based on the condition of the various rules and/or the interaction of the various devices detected.

### BRIEF DESCRIPTION OF THE DRAWINGS

A more complete appreciation of aspects of the disclosure and many of the attendant advantages thereof will be readily obtained as the same becomes better understood by reference to the following detailed description when considered in connection with the accompanying drawings which are presented solely for illustration and not limitation of the disclosure, and in which:
FIG. 1A illustrates a high-level system architecture of a wireless communications system in accordance with an aspect of the disclosure.
FIG. 1B illustrates a high-level system architecture of a wireless communications system in accordance with an aspect of the disclosure.
FIG. 1C illustrates a high-level system architecture of a wireless communications system in accordance with an aspect of the disclosure.
FIG. ID illustrates a high-level system architecture of a wireless communications system in accordance with an aspect of the disclosure.
FIG. IE illustrates a high-level system architecture of a wireless communications system in accordance with an aspect of the disclosure.
FIG. 2A illustrates an exemplary Internet of Things (IoT) device in accordance with aspects of the disclosure, while FIG. 2B illustrates an exemplary passive IoT device in accordance with aspects of the disclosure.
FIG. 3 illustrates a communication device that includes logic configured to perform functionality in accordance with an aspect of the disclosure.
FIG. 4 illustrates an exemplary server according to various aspects of the disclosure.
FIG. 5 illustrates a process for obtaining control information and rules for dynamic discovery and control of devices through a smart controller.
FIG. 6 illustrates communications between a smart controller IoT devices and a server.
FIG. 7 illustrates another example of a high-level system architecture of a wireless communications system.

### DETAILED DESCRIPTION

Various aspects are disclosed in the following description and related drawings. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Further, many aspects are described in terms of sequences of actions to be performed by, for example, elements of a computing device. It will be recognized that various actions described herein can be performed by specific circuits (e.g., an application specific integrated circuit (ASIC)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

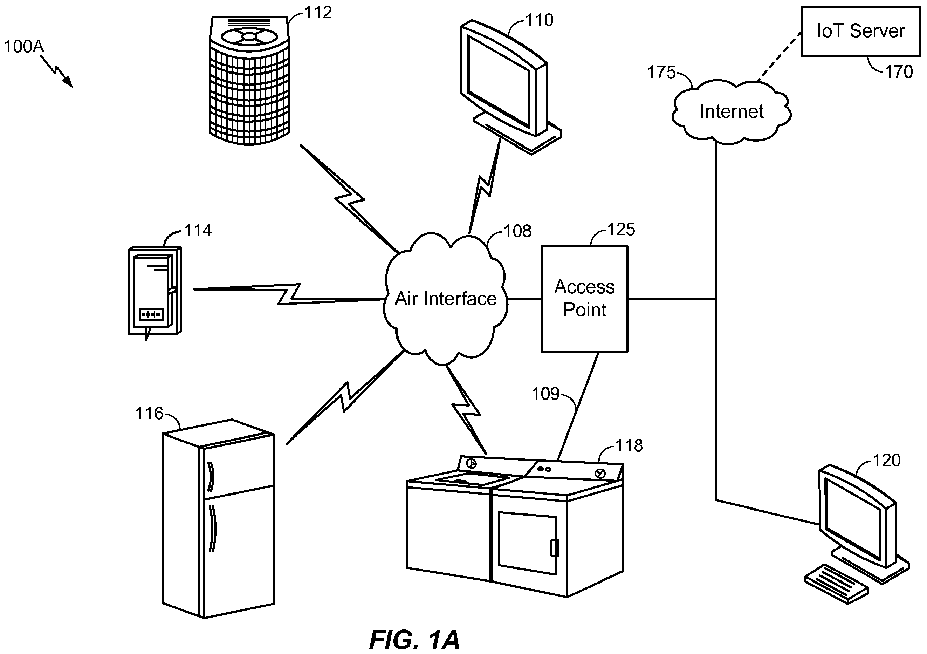

FIG. 1A illustrates a high-level system architecture of a wireless communications system 100A in accordance with an aspect of the disclosure. The wireless communications system 100A contains a plurality of IoT devices, which include a television 110, an outdoor air conditioning unit 112, a thermostat 114, a refrigerator 116, and a washer and dryer 118.

Referring to FIG. 1A, IoT devices 110-118 are configured to communicate with an access network (e.g., an access point 125) over a physical communications interface or layer, shown in FIG. 1A as air interface 108 and a direct wired connection 109. The air interface 108 can comply with a wireless Internet protocol (IP), such as IEEE 802.11. Although FIG. 1A illustrates IoT devices 110-118 communicating over the air interface 108 and IoT device 118 communicating over the wired connection 109, each IoT device may communicate over a wired or wireless connection, or both.

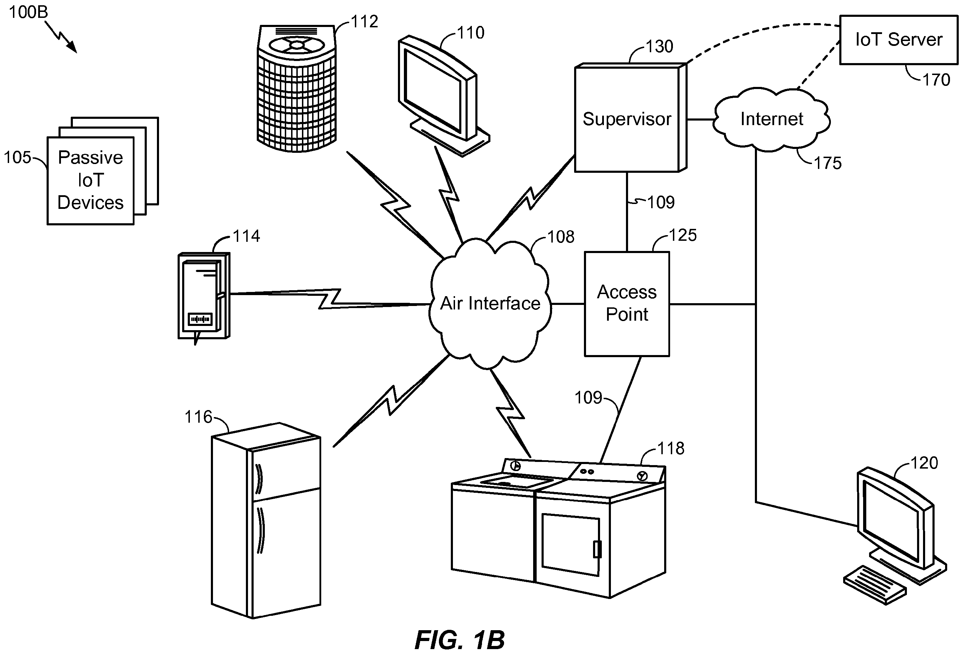

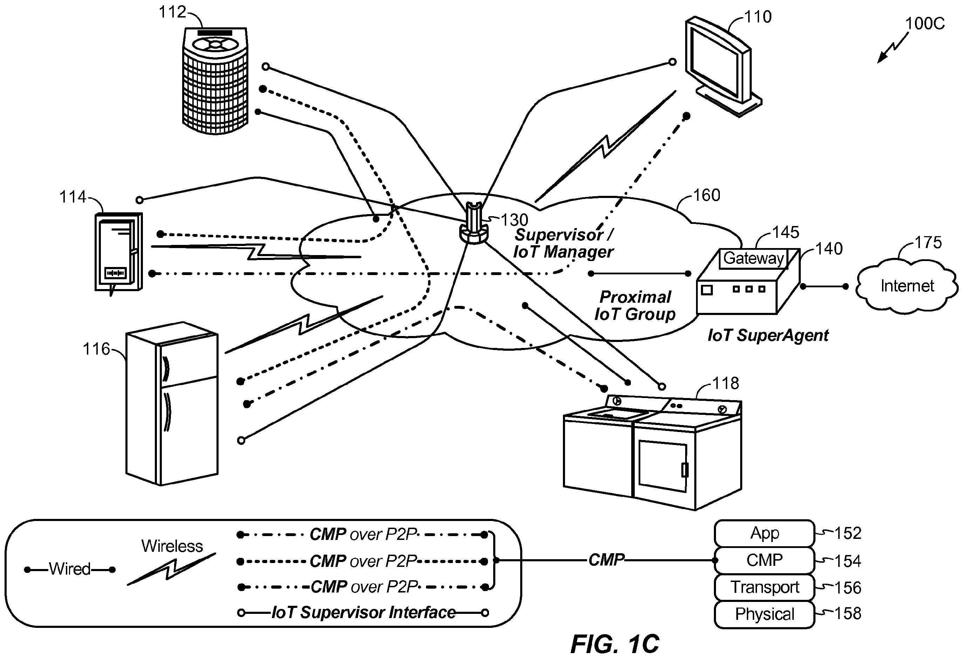

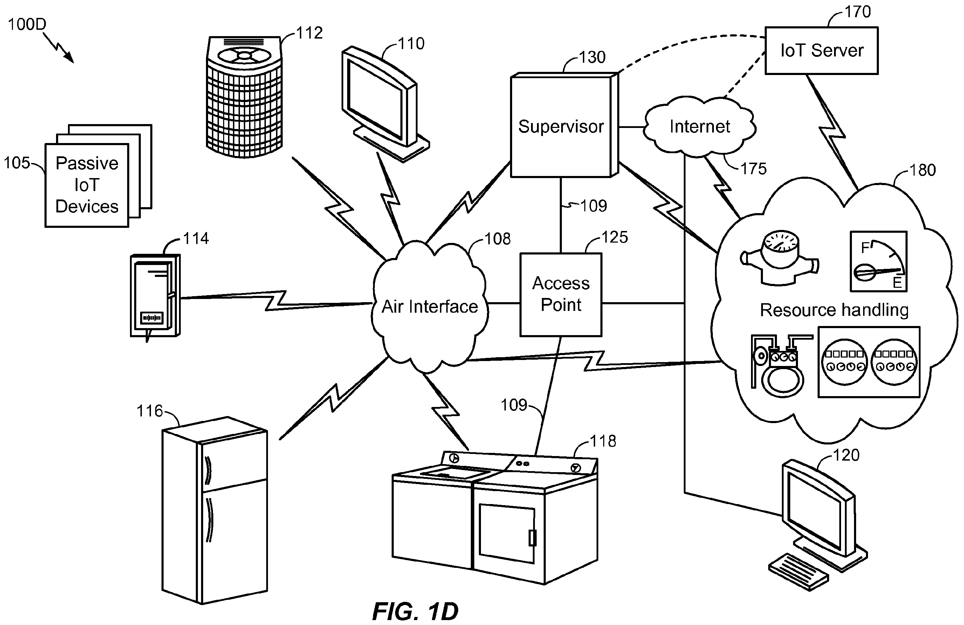

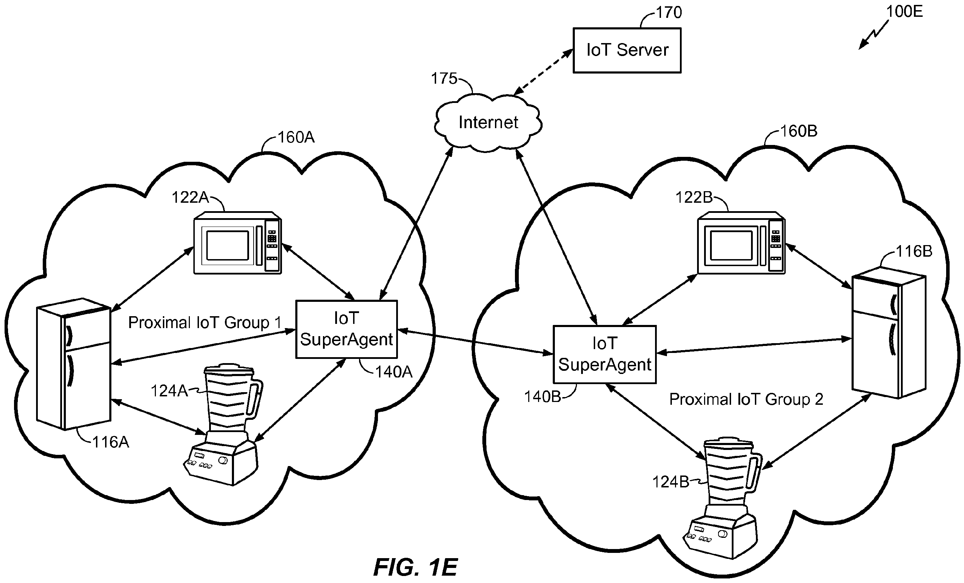

Additionally, as illustrated in FIG. 1, a smart controller 150 may be coupled to the wireless communications system 100 to provide control of the various IoE devices 110-118, as discussed in detail herein.

The Internet 175 includes a number of routing agents and processing agents (not shown in FIG. 1A for the sake of convenience). The Internet 175 is a global system of interconnected computers and computer networks that uses a standard Internet protocol suite (e.g., the Transmission Control Protocol (TCP) and IP) to communicate among disparate devices/networks. TCP/IP provides end-to-end connectivity specifying how data should be formatted, addressed, transmitted, routed and received at the destination.

In FIG. 1A, a computer 120, such as a desktop or personal computer (PC), is shown as connecting to the Internet 175 directly (e.g., over an Ethernet connection or Wi-Fi or 802.11-based network). The computer 120 may have a wired connection to the Internet 175, such as a direct connection to a modem or router, which, in an example, can correspond to the access point 125 itself (e.g., for a Wi-Fi router with both wired and wireless connectivity). Alternatively, rather than being connected to the access point 125 and the Internet 175 over a wired connection, the computer 120 may be connected to the access point 125 over air interface 108 or another wireless interface, and access the Internet 175 over the air interface. Although illustrated as a desktop computer, computer 120 may be a laptop computer, a tablet computer, a PDA, a smart phone, or the like. The computer 120 may be an IoT device and/or contain functionality to manage an IoT network/group, such as the network/group of IoT devices 110-118.

The access point 125 may be connected to the Internet 175 via, for example, an optical communication system, such as FiOS, a cable modem, a digital subscriber line (DSL) modem, or the like. The access point 125 may communicate with IoT devices 110-118/120 and the Internet 175 using the standard Internet protocols (e.g., TCP/IP).

Referring to FIG. 1A, an IoT server 170 is shown as connected to the Internet 175. The IoT server 170 can be implemented as a plurality of structurally separate servers, or alternately may correspond to a single server. In an aspect, the IoT server 170 is optional (as indicated by the dotted line), and the group of IoT devices 110-118/120 may be a peer-to-peer (P2P) network. In such a case, the IoT devices 110-118/120 can communicate with each other directly over the air interface 108 and/or the wired connection 109. Alternatively, or additionally, some or all of IoT devices 110-118/120 may be configured with a communication interface independent of air interface 108 and wired connection 109. For example, if the air interface 108 corresponds to a WiFi interface, certain of the IoT devices 110-118/120 may have Bluetooth or NFC interfaces for communicating directly with each other or other Bluetooth or NFC-enabled devices.

In a peer-to-peer network, service discovery schemes can multicast the presence of nodes, their capabilities, and group membership. The peer-to-peer devices can establish associations and subsequent interactions based on this information.

In accordance with an aspect of the disclosure, FIG. 1B illustrates a high-level architecture of another wireless communications system 100B that contains a plurality of IoT devices. In general, the wireless communications system 100B shown in FIG. 1B may include various components that are the same and/or substantially similar to the wireless communications system 100A shown in FIG. 1A, which was described in greater detail above (e.g., various IoT devices, including a television 110, outdoor air conditioning unit 112, thermostat 114, refrigerator 116, and washer and dryer 118, that are configured to communicate with an access point 125 over an air interface 108 and/or a direct wired connection 109, a computer 120 that directly connects to the Internet 175 and/or connects to the Internet through access point 125, and an IoT server 170 accessible via the Internet 175, etc.). As such, for brevity and ease of description, various details relating to certain components in the wireless communications system 100B shown in FIG. 1B may be omitted herein to the extent that the same or similar details have already been provided above in relation to the wireless communications system 100A illustrated in FIG. 1A.

Referring to FIG. 1B, the wireless communications system 100B may include a supervisor device 130 that may be used to observe, monitor, control, or otherwise manage the various other components in the wireless communications system 100B. For example, the supervisor device 130 can communicate with an access network (e.g., access point 125) over air interface 108 and/or a direct wired connection 109 to monitor or manage attributes, activities, or other states associated with the various IoT devices 110-118/120 in the wireless communications system 100B. The supervisor device 130 may have a wired or wireless connection to the Internet 175 and optionally to the IoT server 170 (shown as a dotted line). The supervisor device 130 may obtain information from the Internet 175 and/or the IoT server 170 that can be used to further monitor or manage attributes, activities, or other states associated with the various IoT devices 110-118/120. The supervisor device 130 may be a standalone device or one of IoT devices 110-118/120, such as computer 120. The supervisor device 130 may be a physical device or a software application running on a physical device. The supervisor device 130 may include a user interface that can output information relating to the monitored attributes, activities, or other states associated with the IoT devices 110-118/120 and receive input information to control or otherwise manage the attributes, activities, or other states associated therewith. Accordingly, the supervisor device 130 may generally include various components and support various wired and wireless communication interfaces to observe, monitor, control, or otherwise manage the various components in the wireless communications system 100B.

The wireless communications system 100B shown in FIG. 1B may include one or more passive IoT devices 105 (in contrast to the active IoT devices 110-118/120) that can be coupled to or otherwise made part of the wireless communications system 100B. In general, the passive IoT devices 105 may include barcoded devices, Bluetooth devices, radio frequency (RF) devices, RFID tagged devices, infrared (IR) devices, NFC tagged devices, or any other suitable device that can provide its identifier and attributes to another device when queried over a short range interface. Active IoT devices may detect, store, communicate, act on, and/or the like, changes in attributes of passive IoT devices.

For example, passive IoT devices 105 may include a coffee cup and a container of orange juice that each have an RFID tag or barcode. A cabinet IoT device and the refrigerator IoT device 116 may each have an appropriate scanner or reader that can read the RFID tag or barcode to detect when the coffee cup and/or the container of orange juice passive IoT devices 105 have been added or removed. In response to the cabinet IoT device detecting the removal of the coffee cup passive IoT device 105 and the refrigerator IoT device 116 detecting the removal of the container of orange juice passive IoT device, the supervisor device 130 may receive one or more signals that relate to the activities detected at the cabinet IoT device and the refrigerator IoT device 116. The supervisor device 130 may then infer that a user is drinking orange juice from the coffee cup and/or likes to drink orange juice from a coffee cup.

Although the foregoing describes the passive IoT devices 105 as having some form of RF or barcode communication interfaces, the passive IoT devices 105 may include one or more devices or other physical objects that do not have such communication capabilities. For example, certain IoT devices may have appropriate scanner or reader mechanisms that can detect shapes, sizes, colors, and/or other observable features associated with the passive IoT devices 105 to identify the passive IoT devices 105. In this manner, any suitable physical object may communicate its identity and attributes and become part of the wireless communications system 100B and be observed, monitored, controlled, or otherwise managed with the supervisor device 130. Further, passive IoT devices 105 may be coupled to or otherwise made part of the wireless communications system 100A shown in FIG. 1A and observed, monitored, controlled, or otherwise managed in a substantially similar manner.

In accordance with another aspect of the disclosure, FIG. 1C illustrates a high-level architecture of another wireless communications system 100C that contains a plurality of IoT devices. In general, the wireless communications system 100C shown in FIG. 1C may include various components that are the same and/or substantially similar to the wireless communications systems 100A and 100B shown in FIGS. 1A and 1B, respectively, which were described in greater detail above. As such, for brevity and ease of description, various details relating to certain components in the wireless communications system 100C shown in FIG. 1C may be omitted herein to the extent that the same or similar details have already been provided above in relation to the wireless communications systems 100A and 100B illustrated in FIGS. 1A and 1B, respectively.

The wireless communications system 100C shown in FIG. 1C illustrates exemplary peer-to-peer communications between the IoT devices 110-118 and the supervisor device 130. As shown in FIG. 1C, the supervisor device 130 communicates with each of the IoT devices 110-118 over an IoT supervisor interface. Further, IoT devices 110 and 114, IoT devices 112, 114, and 116, and IoT devices 116 and 118, communicate directly with each other.

The IoT devices 110-118 make up a proximal IoT group 160. A proximal IoT group is a group of locally connected IoT devices, such as the IoT devices connected to a user's home network. Although not shown, multiple proximal IoT groups may be connected to and/or communicate with each other via an IoT SuperAgent 140 connected to the Internet 175. At a high level, the supervisor device 130 manages intra-group communications, while the IoT SuperAgent 140 can manage inter-group communications. Although shown as separate devices, the supervisor 130 and the IoT SuperAgent 140 may be, or reside on, the same device. This may be a standalone device or an IoT device, such as computer 120 in FIG. 1A. Alternatively, the IoT SuperAgent 140 may correspond to or include the functionality of the access point 125. As yet another alternative, the IoT SuperAgent 140 may correspond to or include the functionality of an IoT server, such as IoT server 170. The IoT SuperAgent 140 may encapsulate gateway functionality 145.

Each IoT device 110-118 can treat the supervisor device 130 as a peer and transmit attribute/schema updates to the supervisor device 130. When an IoT device needs to communicate with another IoT device, it can request the pointer to that IoT device from the supervisor device 130 and then communicate with the target IoT device as a peer. The IoT devices 110-118 communicate with each other over a peer-to-peer communication network using a common messaging protocol (CMP). As long as two IoT devices are CMP-enabled and connected over a common communication transport, they can communicate with each other. In the protocol stack, the CMP layer 154 is below the application layer 152 and above the transport layer 156 and the physical layer 158.

In accordance with another aspect of the disclosure, FIG. ID illustrates a high-level architecture of another wireless communications system 100D that contains a plurality of IoT devices. In general, the wireless communications system 100D shown in FIG. ID may include various components that are the same and/or substantially similar to the wireless communications systems 100A-C shown in FIGS. 1-C, respectively, which were described in greater detail above. As such, for brevity and ease of description, various details relating to certain components in the wireless communications system 100D shown in FIG. ID may be omitted herein to the extent that the same or similar details have already been provided above in relation to the wireless communications systems 100A-C illustrated in FIGS. 1A-C, respectively.

The Internet is a "resource" that can be regulated using the concept of the IoT. However, the Internet is just one example of a resource that is regulated, and any resource could be regulated using the concept of the IoT. Other resources that can be regulated include, but are not limited to, electricity, gas, storage, security, and the like. An IoT device may be connected to the resource and thereby regulate it, or the resource could be regulated over the Internet. FIG. ID illustrates several resources 180, such as natural gas, gasoline, hot water, and electricity, which can be regulated in addition to the Internet 175, or that can be regulated over the Internet 175.

IoT devices can communicate with each other to regulate their use of a resource. For example, IoT devices such as a toaster, a computer, and a hairdryer may communicate with each other over a Bluetooth communication interface to regulate their use of electricity (the resource). As another example, IoT devices such as a desktop computer, a telephone, and a tablet computer may communicate over a WiFi communication interface to regulate their access to the Internet (the resource). As yet another example, IoT devices such as a stove, a clothes dryer, and a water heater may communicate over a WiFi communication interface to regulate their use of gas. Alternatively, or additionally, each IoT device may be connected to an IoT server, such as IoT server 170, which has logic to regulate their use of the resource based on information received from the IoT devices.

In accordance with another aspect of the disclosure, FIG. IE illustrates a high-level architecture of another wireless communications system 100E that contains a plurality of IoT devices. In general, the wireless communications system 100E shown in FIG. IE may include various components that are the same and/or substantially similar to the wireless communications systems 100A-D shown in FIGS. 1-D, respectively, which were described in greater detail above. As such, for brevity and ease of description, various details relating to certain components in the wireless communications system 100E shown in FIG. IE may be omitted herein to the extent that the same or similar details have already been provided above in relation to the wireless communications systems 100A-D illustrated in FIGS. 1A-D, respectively.

The wireless communications system 100E includes two proximal IoT groups 160A and 160B. Multiple proximal IoT groups may be connected to and/or communicate with each other via an IoT SuperAgent connected to the Internet 175. At a high level, an IoT SuperAgent manages inter-group communications. In FIG. IE, the proximal IoT group 160A includes IoT devices 116A, 122A, and 124A and an IoT SuperAgent 140A. The proximal IoT group 160B includes IoT devices 116B, 122B, and 124B and an IoT SuperAgent 140B. IoT SuperAgents 140A and 140B are connected to Internet 175 and may communicate with each other over the Internet 175 or directly. The IoT SuperAgents 140A and 140B facilitate communication between the proximal IoT groups 160A and 160B. Although FIG. IE illustrates two proximal IoT groups communicating with each other via IoT SuperAgents 160A and 160B, any number of proximal IoT groups may communicate with each other using IoT SuperAgents.

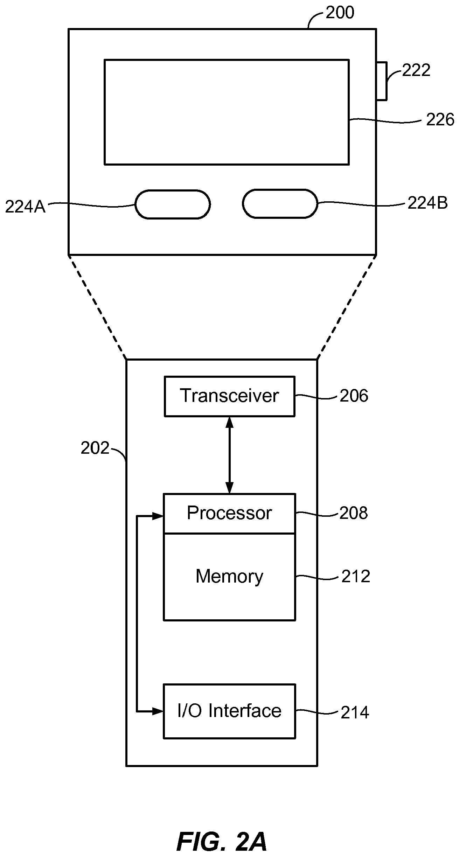

FIG. 2A illustrates a high-level example of an IoT device 200 in accordance with aspects of the disclosure. While external appearances and/or internal components can differ significantly among IoT devices, most IoT devices will have some sort of user interface, which may comprise a display and a means for user input. IoT devices without a user interface can be communicated with remotely over a wired or wireless network, such as air interface 108 in FIGS. 1A-B and D.

As shown in FIG. 2A, in an example configuration for the IoT device 200, an external casing of IoT device 200 may be configured with a display 226, a power button 222, and two control buttons 224A and 224B, among other components, as is known in the art. The display 226 may be a touchscreen display, in which case the control buttons 224A and 224B may not be necessary. While not shown explicitly as part of IoT device 200, the IoT device 200 may include one or more external antennas and/or one or more integrated antennas that are built into the external casing, including but not limited to Wi-Fi antennas, cellular antennas, satellite position system (SPS) antennas (e.g., global positioning system (GPS) antennas), and so on.

While internal components of IoT devices, such as IoT device 200, can be embodied with different hardware configurations, a basic high-level configuration for internal hardware components is shown as platform 202 in FIG. 2A. The platform 202 can receive and execute software applications, data and/or commands transmitted over a network interface, such as air interface 108 in FIGS. 1A-B and D and/or a wired interface. The platform 202 can also independently execute locally stored applications. The platform 202 can include one or more transceivers 206 configured for wired and/or wireless communication (e.g., a Wi-Fi transceiver, a Bluetooth transceiver, a cellular transceiver, a satellite transceiver, a GPS or SPS receiver, etc.) operably coupled to one or more processors 208, such as a microcontroller, microprocessor, application specific integrated circuit, digital signal processor (DSP), programmable logic circuit, or other data processing device, which will be generally referred to as processor 208. The processor 208 can execute application programming instructions within a memory 212 of the IoT device. The memory 212 can include one or more of read-only memory (ROM), random-access memory (RAM), electrically erasable programmable ROM (EEPROM), flash cards, or any memory common to computer platforms. One or more input / output (I/O) interfaces 220 can be configured to allow the processor 208 to communicate with and control from various I/O devices such as the display 226, power button 222, control buttons 224A and 224B as illustrated, and any other devices, such as sensors, actuators, relays, valves, switches, and the like associated with the IoT device 200.

Accordingly, an aspect of the disclosure can include an IoT device (e.g., IoT device 200) including the ability to perform the functions described herein. As will be appreciated by those skilled in the art, the various logic elements can be embodied in discrete elements, software modules executed on a processor or any combination of software and hardware to achieve the functionality disclosed herein. For example, ASIC 208, memory 212, API 210 and local database 214 may all be used cooperatively to load, store and execute the various functions disclosed herein and thus the logic to perform these functions may be distributed over various elements. Alternatively, the functionality could be incorporated into one discrete component. Therefore, the features of the IoT device 200 in FIG. 2A are to be considered merely illustrative and the disclosure is not limited to the illustrated features or arrangement.

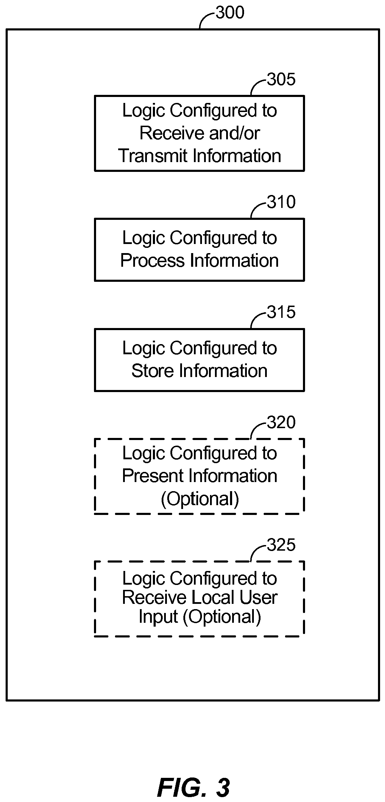

FIG. 3 illustrates a communication device 300 that includes logic configured to perform functionality. The communication device 300 can correspond to any of the above-noted communication devices, including but not limited to IoT devices 110-118/120, IoT device 200A, any components coupled to the Internet 175 (e.g., the IoT server 170), and so on. Thus, communication device 300 can correspond to any electronic device that is configured to communicate with (or facilitate communication with) one or more other entities over the wireless communications systems 100A-B of FIGS. 1A-E.

Referring to FIG. 3, the communication device 300 includes logic configured to receive and/or transmit information 305. In an example, if the communication device 300 corresponds to a wireless communications device (e.g., IoT device 200A and/or passive IoT device 200B), the logic configured to receive and/or transmit information 305 can include a wireless communications interface (e.g., Bluetooth, Wi-Fi, Wi-Fi Direct, Long-Term Evolution (LTE) Direct, etc.) such as a wireless transceiver and associated hardware (e.g., an RF antenna, a MODEM, a modulator and/or demodulator, etc.). In another example, the logic configured to receive and/or transmit information 305 can correspond to a wired communications interface (e.g., a serial connection, a USB or Firewire connection, an Ethernet connection through which the Internet 175 can be accessed, etc.). Thus, if the communication device 300 corresponds to some type of network-based server (e.g., the IoT server 170), the logic configured to receive and/or transmit information 305 can correspond to an Ethernet card, in an example, that connects the network-based server to other communication entities via an Ethernet protocol. In a further example, the logic configured to receive and/or transmit information 305 can include sensory or measurement hardware by which the communication device 300 can monitor its local environment (e.g., an accelerometer, a temperature sensor, a light sensor, an antenna for monitoring local RF signals, etc.). The logic configured to receive and/or transmit information 305 can also include software that, when executed, permits the associated hardware of the logic configured to receive and/or transmit information 305 to perform its reception and/or transmission function(s). However, the logic configured to receive and/or transmit information 305 does not correspond to software alone, and the logic configured to receive and/or transmit information 305 relies at least in part upon hardware to achieve its functionality.

Referring to FIG. 3, the communication device 300 further includes logic configured to process information 310. In an example, the logic configured to process information 310 can include at least a processor. Example implementations of the type of processing that can be performed by the logic configured to process information 310 includes but is not limited to performing determinations, establishing connections, making selections between different information options, performing evaluations related to data, interacting with sensors coupled to the communication device 300 to perform measurement operations, converting information from one format to another (e.g., between different protocols such as .wmv to .avi, etc.), and so on. For example, the processor included in the logic configured to process information 310 can correspond to a general purpose processor, a DSP, an ASIC, a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration). The logic configured to process information 310 can also include software that, when executed, permits the associated hardware of the logic configured to process information 310 to perform its processing function(s). However, the logic configured to process information 310 does not correspond to software alone, and the logic configured to process information 310 relies at least in part upon hardware to achieve its functionality.

Referring to FIG. 3, the communication device 300 further includes logic configured to store information 315. In an example, the logic configured to store information 315 can include at least a non-transitory memory and associated hardware (e.g., a memory controller, etc.). For example, the non-transitory memory included in the logic configured to store information 315 can correspond to RAM, flash memory, ROM, erasable programmable ROM (EPROM), EEPROM, registers, hard disk, a removable disk, a CD-ROM, or any other form of storage medium known in the art. The logic configured to store information 315 can also include software that, when executed, permits the associated hardware of the logic configured to store information 315 to perform its storage function(s). However, the logic configured to store information 315 does not correspond to software alone, and the logic configured to store information 315 relies at least in part upon hardware to achieve its functionality.

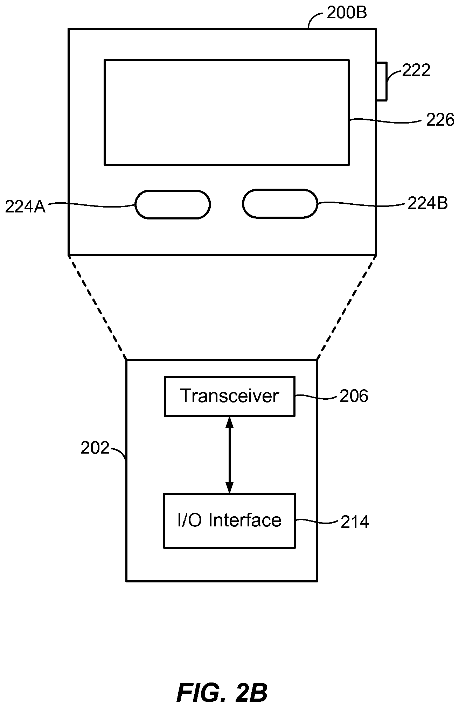

Referring to FIG. 3, the communication device 300 further optionally includes logic configured to present information 320. In an example, the logic configured to present information 320 can include at least an output device and associated hardware. For example, the output device can include a video output device (e.g., a display screen, a port that can carry video information such as USB, HDMI, etc.), an audio output device (e.g., speakers, a port that can carry audio information such as a microphone jack, USB, HDMI, etc.), a vibration device and/or any other device by which information can be formatted for output or actually outputted by a user or operator of the communication device 300. For example, if the communication device 300 corresponds to the IoT device 200A as shown in FIG. 2A and/or the passive IoT device 200B as shown in FIG. 2B, the logic configured to present information 320 can include the display 226. In a further example, the logic configured to present information 320 can be omitted for certain communication devices, such as network communication devices that do not have a local user (e.g., network switches or routers, remote servers, etc.). The logic configured to present information 320 can also include software that, when executed, permits the associated hardware of the logic configured to present information 320 to perform its presentation function(s). However, the logic configured to present information 320 does not correspond to software alone, and the logic configured to present information 320 relies at least in part upon hardware to achieve its functionality.

Referring to FIG. 3, the communication device 300 further optionally includes logic configured to receive local user input 325. In an example, the logic configured to receive local user input 325 can include at least a user input device and associated hardware. For example, the user input device can include buttons, a touchscreen display, a keyboard, a camera, an audio input device (e.g., a microphone or a port that can carry audio information such as a microphone jack, etc.), and/or any other device by which information can be received from a user or operator of the communication device 300. For example, if the communication device 300 corresponds to the IoT device 200A as shown in FIG. 2A and/or the passive IoT device 200B as shown in FIG. 2B, the logic configured to receive local user input 325 can include the buttons 222, 224A, and 224B, the display 226 (if a touchscreen), etc. In a further example, the logic configured to receive local user input 325 can be omitted for certain communication devices, such as network communication devices that do not have a local user (e.g., network switches or routers, remote servers, etc.). The logic configured to receive local user input 325 can also include software that, when executed, permits the associated hardware of the logic configured to receive local user input 325 to perform its input reception function(s). However, the logic configured to receive local user input 325 does not correspond to software alone, and the logic configured to receive local user input 325 relies at least in part upon hardware to achieve its functionality.

Referring to FIG. 3, while the configured logics of 305 through 325 are shown as separate or distinct blocks in FIG. 3, it will be appreciated that the hardware and/or software by which the respective configured logic performs its functionality can overlap in part. For example, any software used to facilitate the functionality of the configured logics of 305 through 325 can be stored in the non-transitory memory associated with the logic configured to store information 315, such that the configured logics of 305 through 325 each performs their functionality (i.e., in this case, software execution) based in part upon the operation of software stored by the logic configured to store information 315. Likewise, hardware that is directly associated with one of the configured logics can be borrowed or used by other configured logics from time to time. For example, the processor of the logic configured to process information 310 can format data into an appropriate format before being transmitted by the logic configured to receive and/or transmit information 305, such that the logic configured to receive and/or transmit information 305 performs its functionality (i.e., in this case, transmission of data) based in part upon the operation of hardware (i.e., the processor) associated with the logic configured to process information 310.

From the foregoing, it will be appreciated that various embodiments can include an apparatus configured for dynamic discovery and control of devices through a smart controller. The apparatus (e.g., communication device 300) can include logic configured to detect a device to be controlled, logic configured to obtain control information about the device, logic configured to obtain rules for controlling the device and logic configure to configure the smart controller to control the device based on the control information and rules. For example, it will be appreciated that the logic can be on or more additional logic elements within communication device 300 or can be integrated into the various elements shown (e.g., the logic configured to receive and/or transmit information 305, can include the functionality to detect a device to be controlled). Accordingly, it will be appreciated that the various illustrations are provide solely for examples and discussion of the various embodiments and not limitation thereof.

Generally, unless stated otherwise explicitly, the phrase "logic configured to" as used throughout this disclosure is intended to invoke an aspect that is at least partially implemented with hardware, and is not intended to map to software-only implementations that are independent of hardware. Also, it will be appreciated that the configured logic or "logic configured to" in the various blocks are not limited to specific logic gates or elements, but generally refer to the ability to perform the functionality described herein (either via hardware or a combination of hardware and software). Thus, the configured logics or "logic configured to" as illustrated in the various blocks are not necessarily implemented as logic gates or logic elements despite sharing the word "logic." Other interactions or cooperation between the logic in the various blocks will become clear to one of ordinary skill in the art from a review of the aspects described below in more detail.

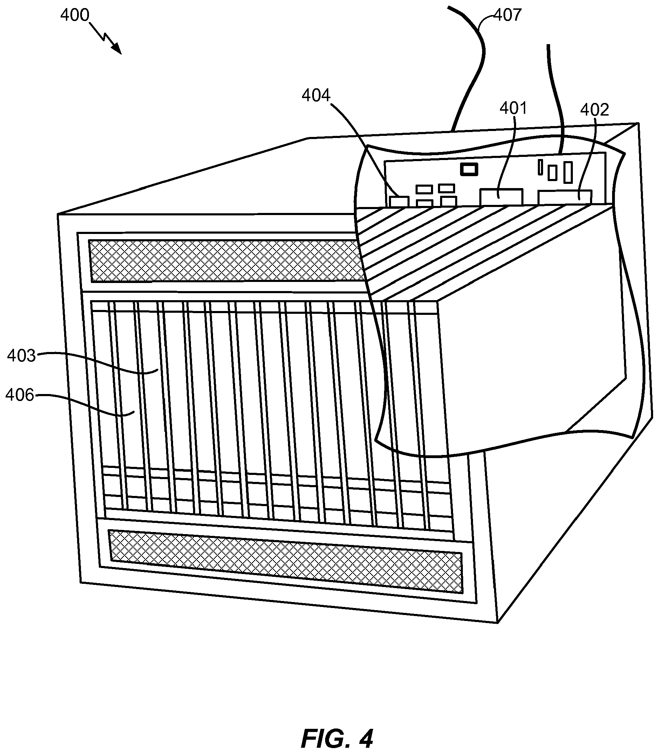

The various embodiments may be implemented on any of a variety of commercially available server devices, such as server 400 illustrated in FIG. 4. In an example, the server 400 may correspond to one example configuration of the IoT server 170 described above. In FIG. 4, the server 400 includes a processor 401 coupled to volatile memory 402 and a large capacity nonvolatile memory, such as a disk drive 403. The server 400 may also include a floppy disc drive, compact disc (CD) or DVD disc drive 406 coupled to the processor 401. The server 400 may also include network access ports 404 coupled to the processor 401 for establishing data connections with a network 407, such as a local area network coupled to other broadcast system computers and servers or to the Internet. In context with FIG. 3, it will be appreciated that the server 400 of FIG. 4 illustrates one example implementation of the communication device 300, whereby the logic configured to transmit and/or receive information 305 corresponds to the network access points 404 used by the server 400 to communicate with the network 407, the logic configured to process information 310 corresponds to the processor 401, and the logic configuration to store information 315 corresponds to any combination of the volatile memory 402, the disk drive 403 and/or the disc drive 406. The optional logic configured to present information 320 and the optional logic configured to receive local user input 325 are not shown explicitly in FIG. 4 and may or may not be included therein. Thus, FIG. 4 helps to demonstrate that the communication device 300 may be implemented as a server, in addition to an IoT device implementation as in FIG. 2A.

IP based technologies and services have become more mature, driving down the cost and increasing availability of IP. This has allowed Internet connectivity to be added to more and more types of everyday electronic objects. The IoT is based on the idea that everyday electronic objects, not just computers and computer networks, can be readable, recognizable, locatable, addressable, and controllable via the Internet.

As noted above, a smart controller (e.g., smart phone, tablet, remote control, laptop, personal computer etc.) may download specific control protocols for devices of various device-types (e.g., lights, printers, refrigerators, air conditioners, audio devices, video devices (e.g., televisions, DVD players) etc.) to implement a desired function that involves their respective attributes (e.g., providing light, cooling an enclosed environment, etc.). It will be appreciated that any device having a suitable network interface and user interface can function as a smart controller. For example, a remote control can be any device wither stand alone or can include functionality integrated into other devices (such as a television) Regardless of the interface, it would also be advantageous to have rules for controlling the device and integrate relationships between the devices to allow for enhanced control capabilities.

The various embodiments in one aspect provide for a dedicated application for each device. By providing a server that translates between the devices and the smart controller application, device manufacturers need not develop individual applications. Among other aspects, the various embodiments allow for:
1) A single smart controller (e.g., smart phone, tablet, etc.) application can control many devices
2) Device manufacturers don't need to develop a smart controller application
3) Adding new devices can be performed on the server
4) Software upgrades can be performed on the server
5) Communication between the various devices does not require the ability to access the server
7) The communication can occur directly between the smart controller and the device.

As discussed above, a local smart controller can interact with a remote server to obtain the control information for the discovered device, also in addition to the control information, there are related control rules. For example, an audio device may be detected and control information about the device may be obtained (e.g., volume, bass, treble, levels, input, etc.). Additionally, rules may be obtained such as limits on volume based on the time of day. Also, rules may be influenced by other devices / persons present and/or their status. For example, the audio may be limited or further limited when the presence of an infant is detected (e.g., an infant monitor is activated, indicating an infant in an adjacent area is present and asleep / resting), regardless of the time of day.

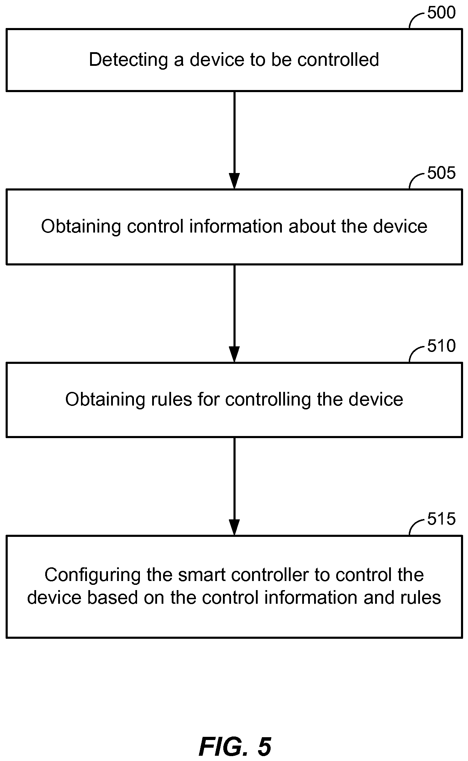

FIG. 5 illustrates a process for obtaining control information and rules for dynamic discovery and control of devices through a smart controller. Referring to FIG. 5, the device controller detects a device to be controlled, 500 from one or more local IoT devices in proximity to each other and the smart controller. The smart controller obtains control information about the device, 505. The information can be obtained from a remote server, as discussed above. Additionally, the smart controller obtains rules for controlling the device, 510. The smart controller can then be configured to control the device based on the control information and rules, 515.

Aspect can further include that the user interface of the smart controller can change dynamically based on the rules. For example, control features may be eliminate, control ranges may be truncated and the like, based on the rule and conditions. For example, lights and/or air conditioning may be limited during certain periods of the day or based on time of year. In another example, in a commercial environment, a hotel may limit the volumes on television, audio devices, etc. based on the time of day and/or the occupancy of adjacent rooms.

Additionally, aspects of the control information received from the server can include available parameters to control, identification of range of parameters, interrelationship of parameters, and connectivity options (e.g., WiFi, infrared, RF, Bluetooth, etc.).

Additionally, aspects of the control rules received from the server. For example, the rules can be related to environmental conditions (e.g., temperature, humidity, etc.). The rules can be related to temporal conditions such as temporal based rules (e.g., time of day, time of year, holiday, etc.). The rules can also include context based rules, such as location, proximity of other devices, other persons presence (which may also include age of person, social relationship of person, the persons state (e.g., awake, asleep), etc.). Accordingly, it will be appreciated that each of the rule and/or control limits may be influenced by other devices, detection of persons directly or via an associated device. For example, a device associated with a child (e.g., hand held game) may be used to detect the presence of a child and automatically adjust a control limit for the available ratings of viewing or listening material for video and audio devices. The presence of the child may also be directly obtained from the controlled device or another device by image recognition, audio / voice detection, and the like. As discussed above, control limits of the device of being controlled can automatically be adjusted based on state information obtained from one or more other devices that are not being controlled by the current rules. As discussed above, the state information can include the presence of an individual, state of an individual, age of an individual, and/or social relationship of an individual.

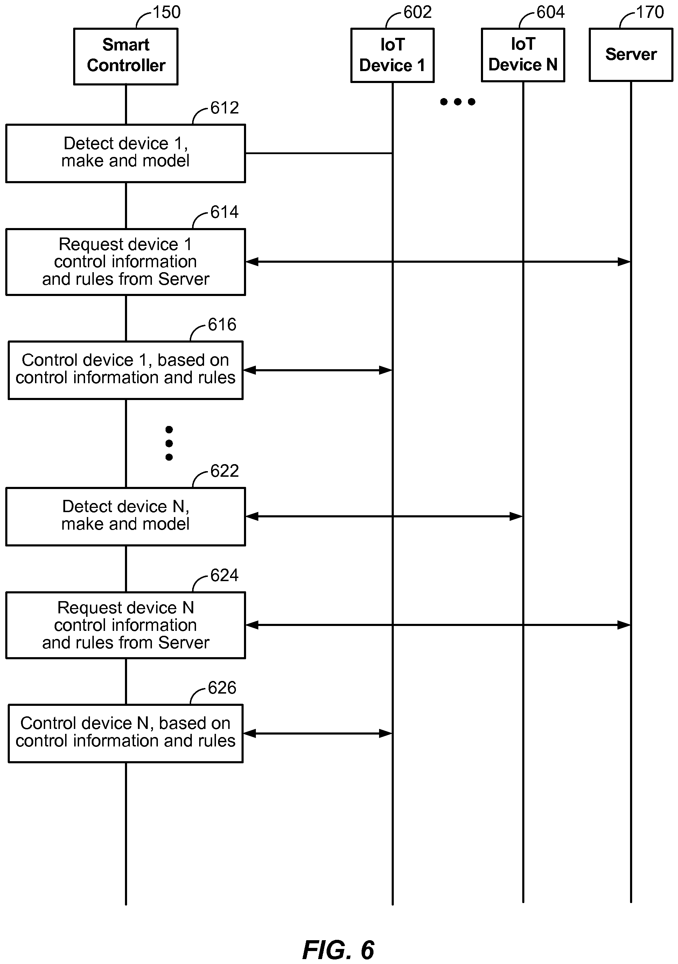

FIG. 6 illustrates communications between the smart controller 150, IoT devices 602 and 604 and server 170. Similarly, as described above, device 1 can be detected by smart controller 150, in block 612. The device may be any IoT device (e.g., a television, an air conditioning unit, a thermostat, a refrigerator, a washer, a dryer, baby monitor, audio device, etc.). Upon detection, the device 602 is queried or sends to the smart controller 150 basic device information (e.g., make, model, etc.) which allows the device 602 to be identified by the smart controller 150 and/or the server 170. The device information is then provided from the smart controller 150 to the server 170 to request and receive control information and rules for the detected device, 602, in block 614. The device 602 can then be controlled based on the control information and rules. The process may be repeated for multiple devices, so that upon detection of device N, 604, it is queried or sends to the smart controller 150 basic device information, in block 622. The device information for device N is then provided from the smart controller 150 to the server 170 to request and receive control information and rules for the detected device N, 604, in block 624. The device N, 604 can then be controlled based on the control information and rules. As noted in the foregoing sections, the control information may be modified dynamically based on the rules and interaction and/or detection of various devices. Accordingly, in one aspect the detection of device N, 604, may dynamically change the control functions of the smart controller for device 1, 602.

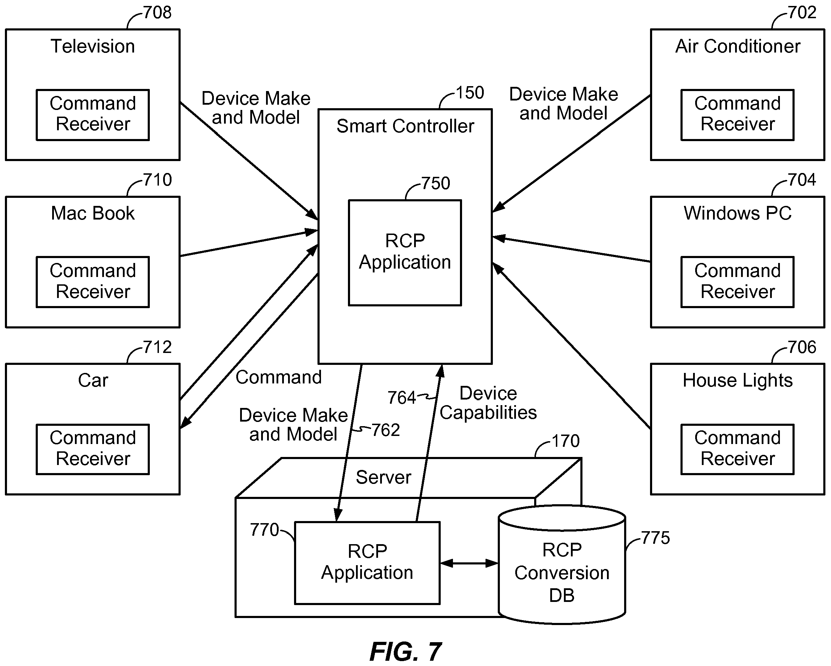

FIG. 7 illustrates another example of high level system architecture of a wireless communications system. IoT devices, such as air conditioner 702, Windows PC 704, lights 706 (which may be individually or group controlled), television 708, MAC PC 710, and car 712, may all include a command receiver logic that can couple to smart controller 150 for receiving commands. The command receiver logic may be integrated into the device in any form such as an executable application running on a processor of the device, a dedicated hardware device the interfaces to the controlled device, or any combination of hardware and/or software executed on an associated processor. The communications to the various IoT devices 702-712 may be over a local area network, such as illustrated in FIG. 1 or over other local connections (e.g., Bluetooth, IR, etc.) or may be over a combinations of both. The smart controller 150 may contain a Remote Control Protocol (RCP) application / logic that is configured to perform the smart control functions described herein. For example, a smart phone or tablet may download the RCP application 750 and upon running the RCP application 750 the smart phone or tablet becomes a smart controller 150 with the functionalities discussed herein. Alternatively, smart controller 150 could be a dedicated device with RCP application / logic embedded from the manufacturer.

Further, as illustrated in FIG. 7, server 170 may have a server RCP application / logic 770 to communicate with the RCP application / logic 750 of smart controller 150. As discussed in the previous sections, after detection of an IoT device, the smart controller 150, specifically RCP application 750 can send the device information 762 (e.g., make and model) to smart controller 150, specifically server RCP application 770 that is configured to receive the information and provide associated control information and rules that are sent 764 back to the smart controller 150 and RCP application 750 to allow control of the various devices. The information regarding the various devices may be stored in an RCP Conversion database (DB) 775. The server RCP application 770 may look up the device control information and rules associated with the device based on the device information provided from RCP application 750. The RCP Conversion DB 775 may be resident in the server memory and/or contained in whole or part on one or more remote servers. For example, in some aspects, various device manufactures could maintain a portion of the RCP Conversion DB 775 related to their products. Alternatively, the information could be transmitted to the server 170 or other central location so that the information from various manufactures are integrated into one RCP Conversion DB 775. Regardless of the implementation of the RCP Conversion DB 775 and its location, the various embodiments allow server 170 and server RCP application 770 to translate between the various IoT devices and the smart controller 150 RCP application 750, so that the various device manufacturers need not develop custom applications and/or smart controllers.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in RAM, flash memory, ROM, EPROM, EEPROM, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in an IoT device. In the alternative, the processor and the storage medium may reside as discrete components in a user terminal.

In one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, DSL, or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes CD, laser disc, optical disc, DVD, floppy disk and Blu-ray disc where disks usually reproduce data magnetically, while discs reproduce data optically with lasers. Combinations of the above should also be included within the scope of computer-readable media.

From the foregoing, it will be appreciated that various embodiments can include a non-transitory computer readable medium having stored instructions that when executed by at least one processor cause the at least one processor to perform functions related to dynamic discovery and control of devices through a smart controller comprising at least one instruction to detect a device to be controlled, at least one instruction to obtain control information about the device, at least one instruction obtain rules for controlling the device and at least one instruction to configure the smart controller to control the device based on the control information and rules. Additionally, it will be appreciated that the various functionalities disclosed herein may be embodied in computer readable medium having stored instructions that when executed by at least one processor cause the at least one processor to perform the various functionalities disclosed.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

## Claims

1. A method for dynamic discovery and control of devices through a smart controller comprising:
detecting (500) a device to be controlled;
sending device information to a server;
obtaining (505) from the server, in response to sending the device information to the server, control information for implementing a function on the device;
obtaining (510) from the server, in response to sending the device information to the server, rules for controlling the control range of the device function;
configuring (515) the smart controller to control the device based on the received control information and the received rules; and
automatically adjusting control limits of the control range of the controlled device based on state information obtained from the device and/or one or more other devices.

2. The method of claim 1, further comprising:
dynamically changing a user interface of the smart controller based on the rules.

3. The method of claim 2, wherein dynamically changing the user interface includes at least one of eliminating one or more control features or changing control ranges.

4. The method of claim 1, wherein the one or more other devices are not being controlled by the smart controller.

5. The method of claim 4, wherein the state information includes at least one of a presence of an individual, state of an individual, age of an individual, or social relationship of an individual.

6. The method of claim 5, wherein the state information is directly detected from at least one of image detection or audio detection.

7. The method of claim 1, wherein the rules are related to environmental conditions.

8. The method of claim 1, wherein the rules are related to temporal conditions.

9. The method of claim 1, wherein the smart controller is at least one of a smart phone, tablet, remote control, laptop or personal computer.

10. A smart controller for dynamic discovery and control of devices comprising:
means arranged to perform the steps of any one of claims 1 to 9.

11. A non-transitory computer readable medium having stored instructions arranged to perform the steps of any one of claims 1 to 9.

## Patentansprüche

1. Ein Verfahren zu dynamischen Auffindung und Steuerung von Einrichtungen durch einen Smart-Controller bzw. eine intelligente Steuervorrichtung, das Folgendes aufweist:
Detektieren (500) einer Einrichtung, die gesteuert werden soll;
Senden von Einrichtungsinformation an einen Server;
Erlangen (505), von dem Server, ansprechend auf das Senden der Einrichtungsinformation an den Server, von Steuerinformation zum Implementieren einer Funktion auf der Einrichtung;
Erlangen (510), von dem Server, ansprechend auf Senden der Einrichtungsinformation an den Server, von Regeln zum Steuern des Steuerbereichs der Einrichtungsfunktion;
Konfigurieren (515) des Smart-Controllers zum Steuern der Einrichtung basierend auf der empfangenen Steuerinformation und den empfangenen Regeln; und
automatisches Anpassen von Steuergrenzen des Steuerbereichs der gesteuerten Einrichtung basierend auf der Zustandsinformation, die von der Einrichtung und/oder einer oder mehreren anderen Einrichtungen erlangt wird.

2. Verfahren nach Anspruch 1, das weiter Folgendes aufweist:
dynamisches Ändern einer Nutzerschnittstelle des Smart-Controllers basierend auf den Regeln.

3. Verfahren nach Anspruch 2, wobei das dynamische Ändern der Nutzerschnittstelle wenigstens eines von Eliminieren eines oder mehrerer Steuermerkmale oder Ändern von Steuerbereichen aufweist.

4. Verfahren nach Anspruch 1, wobei die eine oder die mehreren anderen Einrichtungen nicht durch den Smart-Controller gesteuert werden.

5. Verfahren nach Anspruch 4, wobei die Zustandsinformation wenigstens eines von einer Präsenz eines Individuums, einem Zustand eines Individuums, einem Alter eines Individuums oder einer sozialen Beziehung eines Individuums aufweist.

6. Verfahren nach Anspruch 5, wobei die Zustandsinformation direkt von wenigstens einem von einer Bilddetektion oder einer Audiodetektion detektiert wird.

7. Verfahren nach Anspruch 1, wobei Regeln mit Umgebungsbedingungen in Beziehung stehen.

8. Verfahren nach Anspruch 1, wobei Regeln mit zeitlichen Bedingungen in Beziehung stehen.

9. Verfahren nach Anspruch 1, wobei der Smart-Controller wenigstens eines von einem Smartphone, einem Tablet, einer Fernsteuerung, einem Laptop oder einem PC ist.

10. Ein Smart-Controller bzw. eine intelligente Steuervorrichtung zur dynamischen Auffindung und Steuerung von Einrichtungen, der bzw. die Folgendes aufweist:
Mittel, die ausgelegt sind zum Durchführen der Schritte nach einem der Ansprüche 1 bis 9.

11. Ein nicht transitorisches computerlesbares Medium, das gespeicherte Instruktionen hat, die ausgelegt sind zum Durchführen der Schritte nach einem der Ansprüche 1 bis 9.

## Revendications

1. Un procédé de découverte dynamique et de commande de dispositifs par l'intermédiaire d'un dispositif de commande intelligent comprenant :
la détection (500) d'un dispositif à commander,
l'envoi d'informations de dispositif à un serveur,
l'obtention (505) à partir du serveur, en réponse à l'envoi des informations de dispositif au serveur, d'informations de commande destinées à la mise en oeuvre d'une fonction sur le dispositif,
l'obtention (510) à partir du serveur, en réponse à l'envoi des informations de dispositif au serveur, de règles de commande de la plage de commande de la fonction de dispositif,
la configuration (515) du dispositif de commande intelligent de façon à commander le dispositif en fonction des informations de commande reçues et des règles reçues, et
l'ajustement automatique de limites de commande de la plage de commande du dispositif commandé en fonction d'informations d'état obtenues à partir du dispositif et/ou d'un ou de plusieurs autres dispositifs.

2. Le procédé selon la Revendication 1, comprenant en outre :
la modification dynamique d'une interface utilisateur du dispositif de commande intelligent en fonction des règles.

3. Le procédé selon la Revendication 2, où la modification dynamique de l'interface utilisateur comprend au moins une opération parmi l'élimination d'une ou de plusieurs caractéristiques de commande ou la modification de plages de commande.

4. Le procédé selon la Revendication 1, où les un ou plusieurs autres dispositifs ne sont pas étant commandés par le dispositif de commande intelligent.

5. Le procédé selon la Revendication 4, où les informations d'état comprennent au moins un élément parmi une présence d'une personne, un état d'une personne, un âge d'une personne ou une relation sociale d'une personne.

6. Le procédé selon la Revendication 5, où les informations d'état sont directement détectées à partir d'au moins une opération parmi une détection d'image ou une détection audio.

7. Le procédé selon la Revendication 1, où les règles portent sur des conditions environnementales.

8. Le procédé selon la Revendication 1, où les règles portent sur des conditions temporelles.

9. Le procédé selon la Revendication 1, où le dispositif de commande intelligent est au moins un dispositif parmi un téléphone intelligent, une tablette, une télécommande, un ordinateur portatif ou un ordinateur personnel.

10. Un dispositif de commande intelligent de découverte dynamique et de commande de dispositifs comprenant :
un moyen agencé de façon à exécuter les opérations selon l'une quelconque des Revendications 1 à 9.

11. Un support lisible par ordinateur non transitoire possédant conservées en mémoire des instructions agencées de façon à exécuter les opérations selon l'une quelconque des Revendications 1 à 9.
